# FASCICULE DE BREVET EUROPEEN

(11) **EP 3 695 089 B1**
(45) Date de publication et mention de la délivrance du brevet: **03.11.2021**
(21) Numéro de dépôt: 18792861.9
(22) Date de dépôt: 09.10.2018
(51) Int. Cl.: E06B 9/72

(54) **ACTIONNEUR ÉLECTROMÉCANIQUE TUBULAIRE ET INSTALLATION DOMOTIQUE COMPRENANT UN TEL ACTIONNEUR**
ROHRFÖRMIGES ELEKTROMECHANISCHES STELLGLIED UND HÄUSLICHE AUTOMATISIERUNGSANLAGE MIT EINEM SOLCHEN STELLGLIED
TUBULAR ELECTROMECHANICAL ACTUATOR AND HOME AUTOMATION SYSTEM COMPRISING SUCH AN ACTUATOR

(30) Priorité: 10.10.2017 FR 1759471
(43) Date de publication de la demande: 19.08.2020
(73) Titulaire: Somfy Activites SA, 74300 Cluses (FR)
(72) Inventeur: SONZINI, Marc, 74200 Allinges (FR); DOCHE, Florian, 74000 Annecy (FR)
(74) Mandataire: Lavoix
(86) Numéro de dépôt international: PCT/EP2018/077466
(87) Numéro de publication internationale: WO 2019/072841

(56) Documents cités:
- EP-A1- 2 922 183
- DE-U1-202007 013 331
- FR-A1- 2 983 368
- US-A- 4 079 597

## Description

La présente invention concerne un actionneur électromécanique tubulaire et une installation domotique de fermeture ou de protection solaire comprenant un tel actionneur.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire tel qu'un volet, une porte, une grille, un store ou tout autre matériel équivalent, appelé par la suite écran.

On connaît déjà le document FR 2 983 368 A1 qui décrit un actionneur électromécanique tubulaire pour une installation domotique de fermeture ou de protection solaire. L'actionneur électromécanique comprend un moteur électrique, un réducteur, un arbre de sortie et un carter. Le carter est creux et configuré pour loger le moteur électrique et le réducteur. Le carter comprend une première extrémité et une deuxième extrémité. La deuxième extrémité est opposée à la première extrémité. L'arbre de sortie dépasse du carter au niveau de la première extrémité du carter, dans une configuration assemblée de l'actionneur électromécanique.

En outre, l'assemblage d'un tel actionneur électromécanique prévoit un blocage en rotation du réducteur par rapport au carter, au moyen d'encoches ménagées au niveau d'une extrémité du réducteur et de zones déformées du carter.

Par ailleurs, un tel actionneur électromécanique nécessite de garantir l'étanchéité au niveau de la première extrémité du carter et, plus particulièrement, entre le carter et le réducteur.

Une solution connue pour garantir l'étanchéité au niveau de la première extrémité du carter est de disposer un joint sur un élément de fermeture du réducteur, au niveau de l'extrémité du réducteur la plus proche de la première extrémité du carter. Ce joint est assemblé sur l'élément de fermeture du réducteur par surmoulage.

Cependant, cet actionneur électromécanique présente l'inconvénient de faire frotter le joint contre une surface interne du carter, lors d'une opération d'introduction du réducteur à l'intérieur du carter par chassage, à partir de la deuxième extrémité du carter vers la première extrémité du carter.

Par conséquent, lors de l'opération d'introduction du réducteur à l'intérieur du carter, le joint se détériore, en particulier à cause des frottements du joint contre la surface interne du carter et de résidus métalliques présents sur la surface interne du carter.

La détérioration du joint peut engendrer un défaut d'étanchéité de l'actionneur électromécanique au niveau de la première extrémité du carter et donc d'isolement électrique, suite à l'installation de l'actionneur électromécanique dans l'installation domotique.

Afin de limiter la détérioration du joint, lors de l'opération d'introduction du réducteur à l'intérieur du carter, la surface interne du carter peut être recouverte d'un film d'huile par pulvérisation à l'intérieur du carter.

Néanmoins, cette opération de pulvérisation d'huile à l'intérieur du carter présente l'inconvénient de former un amas graisseux comprenant des résidus métalliques au niveau de la première extrémité du carter, suite à l'opération d'introduction du réducteur à l'intérieur du carter.

En outre, l'opération de surmoulage du joint autour de l'élément de fermeture du réducteur engendre une complexité de réalisation de l'actionneur électromécanique.

Par conséquent, le coût d'obtention de l'actionneur électromécanique est élevé.

La présente invention a pour but de résoudre les inconvénients précités et de proposer un actionneur électromécanique tubulaire, ainsi qu'une installation domotique de fermeture ou de protection solaire comprenant un tel actionneur, permettant de garantir l'étanchéité de manière fiable au niveau d'une première extrémité d'un carter configurée pour le passage d'un arbre de sortie et, plus particulièrement, entre le carter et un réducteur, tout en minimisant les coûts d'obtention de l'actionneur électromécanique.

A cet effet, la présente invention vise, selon un premier aspect, un actionneur électromécanique tubulaire pour une installation domotique de fermeture ou de protection solaire, l'actionneur électromécanique comprenant au moins :
- un moteur électrique,
- un réducteur,
- un arbre de sortie, et
- un carter, le carter étant creux et configuré pour loger au moins le moteur électrique et le réducteur, le carter comprenant une première extrémité et une deuxième extrémité, la deuxième extrémité étant opposée à la première extrémité.

Selon l'invention, l'actionneur électromécanique comprend également un élément de maintien, l'élément de maintien étant assemblé au niveau de la première extrémité du carter, de sorte à obturer la première extrémité du carter. L'élément de maintien comprend au moins une première butée configurée pour coopérer avec le réducteur, dans une configuration assemblée de l'actionneur électromécanique, et une deuxième butée configurée pour coopérer avec le carter, au niveau de la première extrémité du carter, dans la configuration assemblée de l'actionneur électromécanique. En outre, l'élément de maintien comprend au moins un logement configuré pour coopérer avec au moins une nervure du réducteur, de sorte à participer à l'étanchéité entre l'élément de maintien et le réducteur.

Ainsi, l'étanchéité de l'actionneur électromécanique, au niveau de la première extrémité du carter, est mise en œuvre, d'une part, par l'emmanchement en partie de l'élément de maintien à l'intérieur du carter, de sorte à obturer la première extrémité du carter, et, d'autre part, par la formation d'une chicane entre l'élément de maintien et le réducteur, au moyen du logement de l'élément de maintien et de la nervure du réducteur.

De cette manière, l'assemblage de l'élément de maintien avec le carter et le réducteur, au niveau de la première extrémité du carter, permet de garantir l'étanchéité de l'actionneur électromécanique de manière fiable, tout en minimisant les coûts d'obtention de l'actionneur électromécanique.

Par conséquent, un tel assemblage de l'actionneur électromécanique, au niveau de la première extrémité du carter, permet d'éviter un défaut d'étanchéité de l'actionneur électromécanique et donc d'isolement électrique, suite à l'installation de l'actionneur électromécanique dans l'installation domotique.

En outre, une telle construction de l'actionneur électromécanique, au niveau de la première extrémité du carter, permet de s'affranchir d'un joint et des risques de détérioration de celui-ci, lors de l'assemblage de l'actionneur électromécanique et, plus particulièrement, lors de l'introduction du réducteur à l'intérieur du carter, ainsi que d'une opération additionnelle de pulvérisation d'un film d'huile sur une surface interne du carter.

Selon une caractéristique avantageuse de l'invention, le réducteur comprend un embout configuré pour coopérer avec l'élément de maintien, au niveau de la première extrémité du carter, dans la configuration assemblée de l'actionneur électromécanique.

Selon une autre caractéristique avantageuse de l'invention, l'embout comprend des encoches et des languettes, disposées alternativement autour d'un axe de rotation de l'actionneur électromécanique, configurées pour coopérer, respectivement, avec des languettes et des encoches de l'élément de maintien.

Selon une autre caractéristique avantageuse de l'invention, l'élément de maintien comprend des crans configurés pour coopérer avec des premières échancrures du carter, les premières échancrures étant ménagées au niveau de la première extrémité du carter.

Selon une autre caractéristique avantageuse de l'invention, l'élément de maintien comprend une ouverture de passage de l'arbre de sortie.

Selon une autre caractéristique avantageuse de l'invention, l'élément de maintien comprend des éléments de fixation configurés pour coopérer avec des éléments de fixation du carter.

Selon une autre caractéristique avantageuse de l'invention, les éléments de fixation de l'élément de maintien et du carter sont des éléments de fixation par encliquetage élastique.

Selon une autre caractéristique avantageuse de l'invention, l'arbre de sortie est configuré pour dépasser du carter au niveau de la première extrémité du carter, dans la configuration assemblée de l'actionneur électromécanique.

Selon une autre caractéristique avantageuse de l'invention, l'élément de maintien est configuré pour être inséré à l'intérieur du carter, jusqu'à la mise en appui de la deuxième butée de l'élément de maintien avec le carter, avec un ajustement serré, de sorte à participer à l'étanchéité entre l'élément de maintien et le carter.

La présente invention vise, selon un deuxième aspect, une installation domotique de fermeture ou de protection solaire comprenant un écran enroulable sur un tube d'enroulement entraîné en rotation par un actionneur électromécanique tubulaire conforme à l'invention.

Cette installation domotique présente des caractéristiques et avantages analogues à ceux décrits précédemment en relation avec l'actionneur électromécanique tubulaire tel que mentionné ci-dessus.

D'autres particularités et avantages de l'invention apparaîtront encore dans la description ci-après, faite en référence aux dessins annexés, donnés à titre d'exemples non limitatifs :
- la figure 1 est une vue schématique en coupe transversale d'une installation domotique conforme à un mode de réalisation de l'invention ;
- la figure 2 est une vue schématique en perspective de l'installation domotique illustrée à la figure 1 ;
- la figure 3 est une vue schématique en coupe axiale et partielle de l'installation domotique illustrée aux figures 1 et 2 montrant un actionneur électromécanique tubulaire de l'installation ;
- la figure 4 est une vue schématique en coupe de l'actionneur électromécanique illustré à la figure 3, selon un plan de coupe décalé par rapport à un axe longitudinal de l'actionneur ;
- la figure 5 est une vue schématique en coupe partielle de l'actionneur électromécanique illustré à la figure 3, selon un plan de coupe passant par l'axe longitudinal de l'actionneur ;
- la figure 6 est une vue schématique en coupe et en perspective d'une partie de l'actionneur électromécanique illustré aux figures 4 et 5, représentant un élément d'obturation, un élément d'interface et un élément d'inhibition ;
- la figure 7 est une vue schématique éclatée et en perspective d'une partie de l'actionneur électromécanique illustré aux figures 4 et 5, représentant une partie d'un carter de l'actionneur électromécanique, un réducteur, un arbre de sortie, un embout et un élément de maintien ;
- la figure 8 à 10 sont des vues schématiques en coupe et en perspective d'une partie de l'actionneur électromécanique illustré aux figures 4, 5 et 7, selon différentes orientations du plan de coupe par rapport à un axe de rotation de l'actionneur électromécanique, représentant l'assemblage de l'élément de maintien par rapport au carter, au réducteur et à l'arbre de sortie ;
- la figure 11 est une vue schématique en coupe d'une partie de l'actionneur électromécanique illustré aux figures 4, 5 et 7, représentant l'assemblage de l'élément de maintien par rapport au carter, au réducteur et à l'arbre de sortie ;
- la figure 12 est une vue schématique éclatée et en perspective d'une partie de l'actionneur électromécanique illustré aux figures 4 et 5, représentant une partie du carter de l'actionneur électromécanique, une couronne, l'élément d'obturation, l'élément d'interface et l'élément d'inhibition ; et
- la figure 13 est une vue schématique de l'actionneur électromécanique illustré aux figures 4 et 5, représentative d'un procédé d'assemblage de cet actionneur.

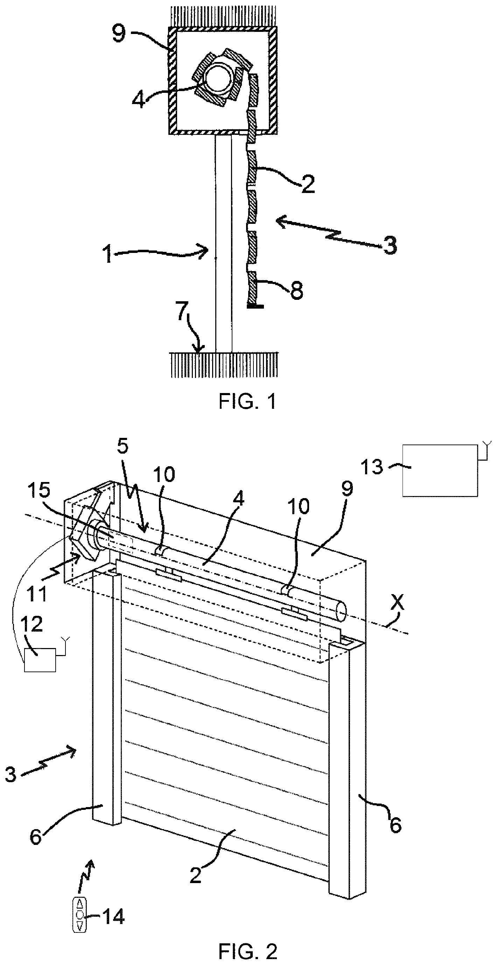

On décrit tout d'abord, en référence aux figures 1 et 2, une installation domotique conforme à l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, un store en toile ou avec des lames orientables, ou encore un portail roulant. La présente invention s'applique à tous les types de dispositif d'occultation.

On décrit, en référence aux figures 1 et 2, un volet roulant conforme à un mode de réalisation de l'invention.

L'écran 2 du dispositif d'occultation 3 est enroulé sur un tube d'enroulement 4 entraîné par un dispositif d'entraînement motorisé 5 et mobile entre une position enroulée, en particulier haute, et une position déroulée, en particulier basse.

L'écran 2 mobile du dispositif d'occultation 3 est un écran de fermeture, d'occultation et/ou de protection solaire, s'enroulant sur le tube d'enroulement 4 dont le diamètre intérieur est supérieur au diamètre externe d'un actionneur électromécanique 11, de sorte que l'actionneur électromécanique 11 puisse être inséré dans le tube d'enroulement 4, lors de l'assemblage du dispositif d'occultation 3.

Le dispositif d'entraînement motorisé 5 comprend l'actionneur électromécanique 11, de type tubulaire, permettant de mettre en rotation le tube d'enroulement 4, de sorte à dérouler ou enrouler l'écran 2 du dispositif d'occultation 3.

Le dispositif d'occultation 3 comprend le tube d'enroulement 4 pour enrouler l'écran 2. Dans l'état monté, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux glissières latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3, et la position basse déroulée correspond à la mise en appui de la lame d'extrémité finale 8 du tablier 2 du volet roulant 3 contre un seuil 7 de l'ouverture 1.

La première lame du tablier 2 du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Le dispositif d'entraînement motorisé 5 est commandé par une unité de commande. L'unité de commande peut être, par exemple, une unité de commande locale 12, où l'unité de commande locale 12 peut être reliée en liaison filaire ou non filaire avec une unité de commande centrale 13. L'unité de commande centrale 13 pilote l'unité de commande locale 12, ainsi que d'autres unités de commande locales similaires et réparties dans le bâtiment.

L'unité de commande centrale 13 peut être en communication avec une station météorologique déportée à l'extérieur du bâtiment, incluant, notamment, un ou plusieurs capteurs pouvant être configurés pour déterminer, par exemple, une température, une luminosité ou encore une vitesse de vent.

Une télécommande 14, pouvant être un type d'unité de commande locale, et pourvue d'un clavier de commande, qui comprend des éléments de sélection et d'affichage, permet, en outre, à un utilisateur d'intervenir sur l'actionneur électromécanique 11 et/ou l'unité de commande centrale 13.

Le dispositif d'entraînement motorisé 5 est, de préférence, configuré pour exécuter les commandes de déroulement ou d'enroulement de l'écran 2 du dispositif d'occultation 3, pouvant être émises, notamment, par la télécommande 14.

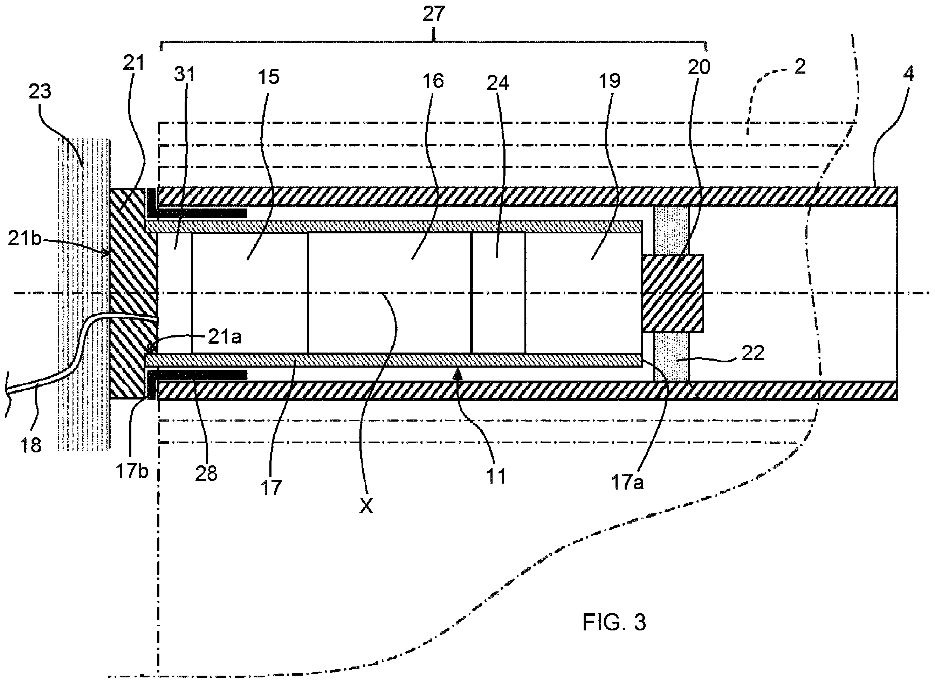

On décrit à présent, plus en détail et en référence aux figures 3 à 13, l'actionneur électromécanique 11 appartenant à l'installation domotique des figures 1 et 2.

L'actionneur électromécanique 11 comprend un moteur électrique 16, un réducteur 19 et un arbre de sortie 20.

En outre, l'actionneur électromécanique 11 peut comprendre une unité électronique de contrôle 15.

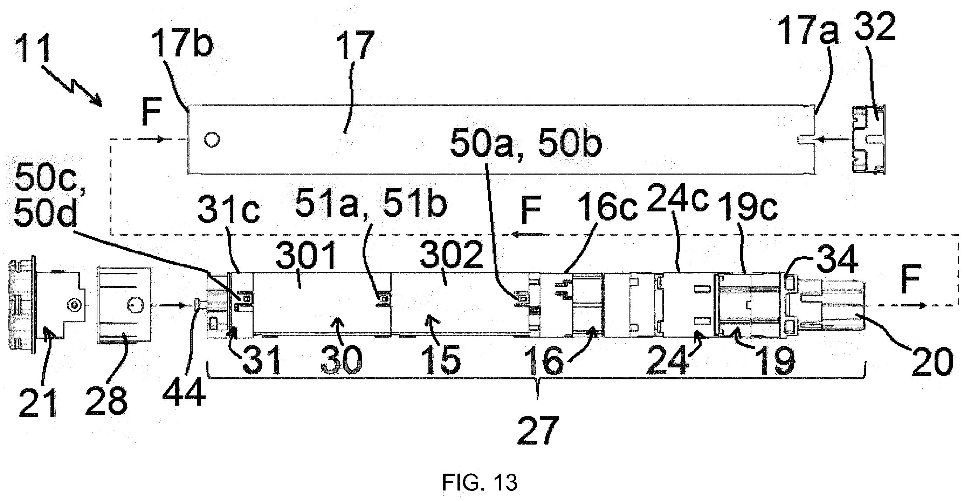

Ici, le moteur électrique 16, le réducteur 19, l'arbre de sortie 20 et, éventuellement, l'unité électronique de contrôle 15 forment un ensemble 27, tel qu'illustré aux figures 3 et 13.

Ainsi, l'ensemble 27 est formé par des organes de l'actionneur électromécanique 11, dont le moteur électrique 16, le réducteur 19, l'arbre de sortie 20 et, éventuellement, l'unité électronique de contrôle 15 font partie intégrante.

Le moteur électrique 16 comprend un rotor et un stator, non représentés, positionnés de manière coaxiale autour d'un axe de rotation X, qui est également l'axe de rotation du tube d'enroulement 4 en configuration montée du dispositif d'entraînement motorisé 5.

Ici, le réducteur 19 est du type à engrenages.

En pratique, le moteur électrique 16 comprend un arbre de sortie, non représenté, configuré pour coopérer avec un arbre d'entrée, non représenté, du réducteur 19, dans une configuration assemblée de l'actionneur électromécanique 11.

Des moyens de commande de l'actionneur électromécanique 11, permettant le déplacement de l'écran 2 du dispositif d'occultation 3, comprennent au moins l'unité électronique de contrôle 15. Cette unité électronique de contrôle 15 est apte à mettre en fonctionnement le moteur électrique 16 de l'actionneur électromécanique 11 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

L'unité électronique de contrôle 15 comprend également un module de réception d'ordres, en particulier d'ordres radioélectriques émis par un émetteur d'ordres, tel que la télécommande 14 destinée à commander l'actionneur électromécanique 11 ou l'une des unités de commande locale 12 ou centrale 13.

Le module de réception d'ordres peut également permettre la réception d'ordres transmis par des moyens filaires.

Les moyens de commande de l'actionneur électromécanique 11 comprennent des moyens matériels et/ou logiciels.

A titre d'exemple nullement limitatif, les moyens matériels peuvent comprendre au moins un microcontrôleur.

L'actionneur électromécanique 11 comprend également un carter 17, en particulier de forme tubulaire.

Le carter 17 de l'actionneur électromécanique 11 est, préférentiellement, de forme cylindrique et, plus particulièrement, de section circulaire.

Dans un mode de réalisation, le carter 17 est réalisé dans un matériau électriquement conducteur, notamment métallique.

La matière du carter de l'actionneur électromécanique n'est pas limitative et peut être différente. Il peut, en particulier, s'agir d'une matière plastique.

Le carter 17 est creux et configuré pour loger le moteur électrique 16, le réducteur 19 et, éventuellement, l'unité électronique de contrôle 15. En outre, le carter 17 peut, éventuellement, être configuré pour loger en partie l'arbre de sortie 20.

Le carter 17 comprend une première extrémité 17a et une deuxième extrémité 17b. La deuxième extrémité 17b est opposée à la première extrémité 17a.

L'arbre de sortie 20 de l'actionneur électromécanique 11 est configuré pour dépasser du carter 17 au niveau de la première extrémité 17a du carter 17, dans la configuration assemblée de l'actionneur électromécanique 11.

Ainsi, l'arbre de sortie 20 de l'actionneur électromécanique 11 est disposé à l'intérieur du tube d'enroulement 4 et au moins en partie à l'extérieur du carter 17 de l'actionneur électromécanique 11.

Avantageusement, l'arbre de sortie 20 de l'actionneur électromécanique 11 est accouplé, par un élément de liaison 22, au tube d'enroulement 4, en particulier un élément de liaison en forme de roue.

L'actionneur électromécanique 11 est alimenté en énergie électrique par un réseau d'alimentation électrique du secteur, ou encore au moyen d'une batterie, pouvant être rechargée, par exemple, par un panneau photovoltaïque. L'actionneur électromécanique 11 permet de déplacer l'écran 2 du dispositif d'occultation 3.

Ici, l'actionneur électromécanique 11 comprend un câble d'alimentation électrique 18 permettant son alimentation en énergie électrique à partir du réseau d'alimentation électrique du secteur.

Avantageusement, l'actionneur électromécanique 11 comprend également un frein 24.

Ici, le frein 24 de l'actionneur électromécanique 11 fait partie intégrante de l'ensemble 27.

A titre d'exemple nullement limitatif, le frein 24 peut être un frein à ressort, un frein à came ou un frein électromagnétique.

Avantageusement, l'actionneur électromécanique 11 peut également comprendre un dispositif de détection de fin de course et/ou d'obstacle, pouvant être mécanique ou électronique.

L'actionneur électromécanique 11 comprend également un élément d'obturation 21 de la deuxième extrémité 17b du carter 17.

L'élément d'obturation 21 est configuré pour dépasser du carter 17 au niveau de la deuxième extrémité 17b du carter 17, dans la configuration assemblée de l'actionneur électromécanique 11.

En pratique, l'élément d'obturation 21 est disposé à une extrémité de l'actionneur électromécanique 11 opposée à celle au niveau de laquelle l'arbre de sortie 20 fait saillie à partir du carter 17.

Ici, le carter 17 de l'actionneur électromécanique 11 est fixé à un support 23, en particulier une joue, du coffre 9 du dispositif d'occultation 3 au moyen de l'élément d'obturation 21 formant un support de couple, en particulier une tête d'obturation et de reprise de couple. Dans un tel cas où l'élément d'obturation 21 forme un support de couple, l'élément d'obturation 21 est également appelé un point fixe de l'actionneur électromécanique 11.

Avantageusement, l'élément d'obturation 21 est réalisé en matière plastique et, plus particulièrement, par moulage.

Dans l'exemple de réalisation illustré aux figures 3 à 6 et 12 à 13, l'élément d'obturation 21 est une unique pièce, en particulier de type monobloc.

Ici, l'élément d'obturation 21 est une pièce de révolution.

L'élément d'obturation 21 comprend une première partie 21a configurée pour coopérer avec le carter 17 de l'actionneur électromécanique 11 et une deuxième partie 21b configurée pour coopérer avec le support 23.

Au moins la première partie 21a de l'élément d'obturation 21 est de forme générale cylindrique et est disposée à l'intérieur du carter 17 de l'actionneur électromécanique 11, dans la configuration assemblée de l'actionneur électromécanique 11.

Avantageusement, l'élément d'obturation 21 comprend une butée 25 configurée pour coopérer avec le carter 17, au niveau de la deuxième extrémité 17b du carter 17, dans la configuration assemblée de l'actionneur électromécanique 11, en particulier par l'intermédiaire d'une couronne 28.

Ainsi, la butée 25 de l'élément d'obturation 21 permet de limiter l'enfoncement de la première partie 21a de l'élément d'obturation 21 dans le carter 17.

En outre, la butée 25 de l'élément d'obturation 21 délimite les première et deuxième parties 21a, 21b de l'élément d'obturation 21.

Ainsi, seule la première partie 21a de l'élément d'obturation 21 est disposée à l'intérieur du carter 17 de l'actionneur électromécanique 11, suite à l'emmanchement de l'élément d'obturation 21 à l'intérieur du carter 17, jusqu'à la butée 25.

Ici, la butée 25 de l'élément d'obturation 21 est réalisée sous la forme d'une collerette, en particulier de forme cylindrique et plane.

En variante, non représentée, l'élément d'obturation 21 comprend au moins deux pièces. La première pièce de l'élément d'obturation 21 comprend la première partie 21a de l'élément d'obturation 21 configurée pour coopérer avec le carter 17 de l'actionneur électromécanique 11. La deuxième pièce de l'élément d'obturation 21 comprend la deuxième partie 21b de l'élément d'obturation 21 configurée pour coopérer avec le support 23.

Avantageusement, l'actionneur électromécanique 11 comprend la couronne 28. La couronne 28 est disposée autour du carter 17 de l'actionneur électromécanique 11 et au niveau de la deuxième extrémité 17b du carter 17.

Ici, le tube d'enroulement 4 est entraîné en rotation autour de l'axe de rotation X et du carter 17 de l'actionneur électromécanique 11 soutenu par l'intermédiaire de deux liaisons pivot. La première liaison pivot est réalisée au niveau d'une première extrémité du tube d'enroulement 4 au moyen de la couronne 28. La couronne 28 permet ainsi de réaliser un palier. La deuxième liaison pivot, non représentée, est réalisée au niveau d'une deuxième extrémité du tube d'enroulement 4.

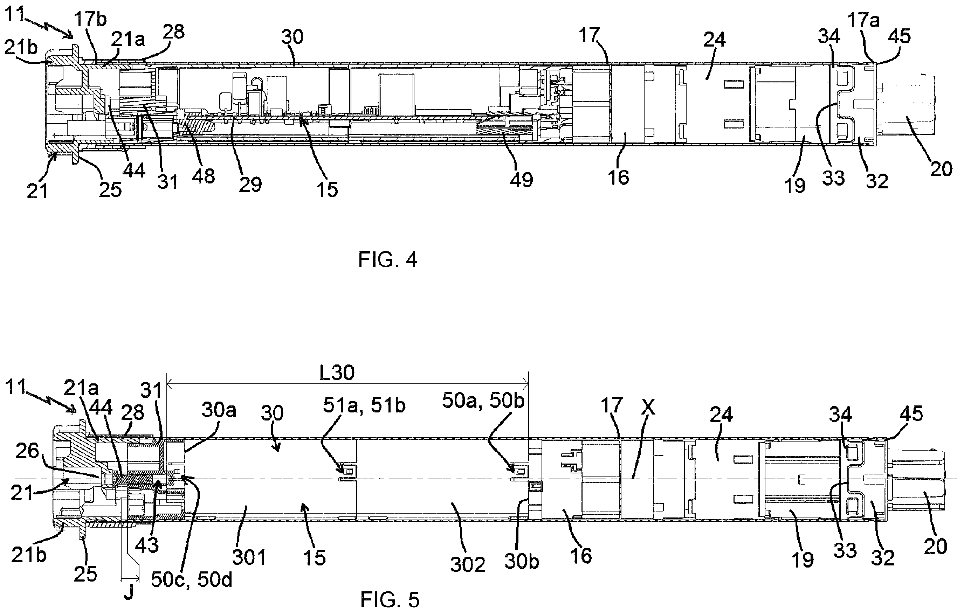

L'actionneur électromécanique 11 comprend également un élément d'interface 31, comme illustré aux figures 4 à 6, 12 et 13. L'élément d'interface 31 est disposé entre l'élément d'obturation 21 et, plus particulièrement, la première partie 21a de l'élément d'obturation 21, et l'unité électronique de contrôle 15, suivant la direction de l'axe de rotation X.

Ici, l'élément d'interface 31 de l'actionneur électromécanique 11 fait partie intégrante de l'ensemble 27.

Ici, et tel qu'illustré aux figures 4 et 5, l'unité électronique de contrôle 15, le moteur électrique 16, le réducteur 19, l'élément d'interface 31 et le frein 24 sont disposés à l'intérieur du carter 17 de l'actionneur électromécanique 11.

Préférentiellement, les organes 31, 15, 16, 19, 24, 20 de l'ensemble 27 sont assemblés entre eux dans un ordre prédéterminé. L'ordre prédéterminé d'assemblage des organes 31, 15, 16, 19, 24, 20 de l'ensemble 27 comprend en premier lieu l'assemblage de l'élément d'interface 31 avec l'unité électronique de contrôle 15, puis l'assemblage de l'unité électronique de contrôle 15 avec le moteur électrique 16, puis l'assemblage du moteur électrique 16 avec le réducteur 19 et l'assemblage du réducteur 19 avec l'arbre de sortie 20.

Dans l'exemple de réalisation illustré aux figures 3 à 5 et 13, le frein 24 est disposé entre le moteur électrique 16 et le réducteur 19.

En variante, non représentée, le frein 24 est disposé entre le réducteur 19 et l'arbre de sortie 20.

Ici, chaque organe 31, 15, 16, 19, 24, 20 de l'ensemble 27 présente un axe qui est confondu avec l'axe de rotation X, dans la configuration assemblée de l'actionneur électromécanique 11. L'axe de chacun des organes 15, 16, 19, 24, 20 de l'ensemble 27 n'est pas représenté sur les figures 3 à 13, de sorte à simplifier la lecture de celles-ci.

Avantageusement, l'unité électronique de contrôle 15 comprend un boîtier 30 et une carte électronique 29. La carte électronique 29 est disposée à l'intérieur du boîtier 30, dans une configuration assemblée de l'unité électronique de contrôle 15.

Ainsi, le boîtier 30 de l'unité électronique de contrôle 15 permet de protéger la carte électronique 29, lors de l'assemblage de l'actionneur électromécanique 11 et suite à l'assemblage de ce dernier, ainsi que d'assurer la rigidité de l'ensemble 27.

En outre, le boîtier 30 de l'unité électronique de contrôle 15 permet d'isoler électriquement la carte électronique 29 par rapport au carter 17.

Ici et comme illustré aux figures 5 et 13, le boîtier 30 comprend un premier tronçon 301, réalisé sous la forme d'un premier tube creux, et un deuxième tronçon 302, réalisé sous la forme d'un deuxième tube creux.

Les premier et deuxième tronçons 301, 302 sont configurés pour loger la carte électronique 29, dans la configuration assemblée de l'unité électronique de contrôle 15.

En variante, non représentée, le boîtier 30 comprend un unique tronçon.

Le boîtier 30 de l'unité électronique de contrôle 15 est, préférentiellement, de forme cylindrique et, plus particulièrement, de section circulaire.

Préférentiellement, le diamètre extérieur du boîtier 30 de l'unité électronique de contrôle 15 est inférieur au diamètre intérieur du carter 17 de l'actionneur électromécanique 11, de sorte que le boîtier 30 puisse être inséré dans le carter 17 de l'actionneur électromécanique 11, lors de l'assemblage de l'actionneur électromécanique 11.

Ici, le boîtier 30 de l'unité électronique de contrôle 15 comprend une première extrémité 30a configurée pour coopérer avec l'élément d'interface 31 et une deuxième extrémité 30b configurée pour coopérer avec le moteur électrique 16.

En outre, la carte électronique 29 est configurée pour coopérer avec un connecteur électrique 48 de l'élément d'interface 31, dans la configuration assemblée de l'actionneur électromécanique 11. En outre, la carte électronique 29 est configurée pour coopérer avec un connecteur électrique 49 du moteur électrique 16, dans la configuration assemblée de l'actionneur électromécanique 11.

On décrit à présent, en référence aux figures 3 à 13, les différents organes de l'actionneur électromécanique 11 appartenant à l'installation domotique des figures 1 et 2.

Avantageusement, le moteur électrique 16 présente un corps 16c, comme illustré à la figure 13. En outre, le corps 16c du moteur électrique 16 est, préférentiellement, de forme cylindrique et, plus particulièrement, de section circulaire.

Préférentiellement, le diamètre extérieur du corps 16c du moteur électrique 16 est inférieur au diamètre intérieur du carter 17 de l'actionneur électromécanique 11, de sorte que le corps 16c du moteur électrique 16 puisse être inséré dans le carter 17 de l'actionneur électromécanique 11, lors de l'assemblage de l'actionneur électromécanique 11.

Avantageusement, le réducteur 19 présente un corps 19c, comme illustré à la figure 13. En outre, le corps 19c du réducteur 19 est, préférentiellement, de forme cylindrique et, plus particulièrement, de section circulaire.

Préférentiellement, le diamètre extérieur du corps 19c du réducteur 19 est inférieur au diamètre intérieur du carter 17 de l'actionneur électromécanique 11, de sorte que le corps 19c du réducteur 19 puisse être inséré dans le carter 17 de l'actionneur électromécanique 11, lors de l'assemblage de l'actionneur électromécanique 11.

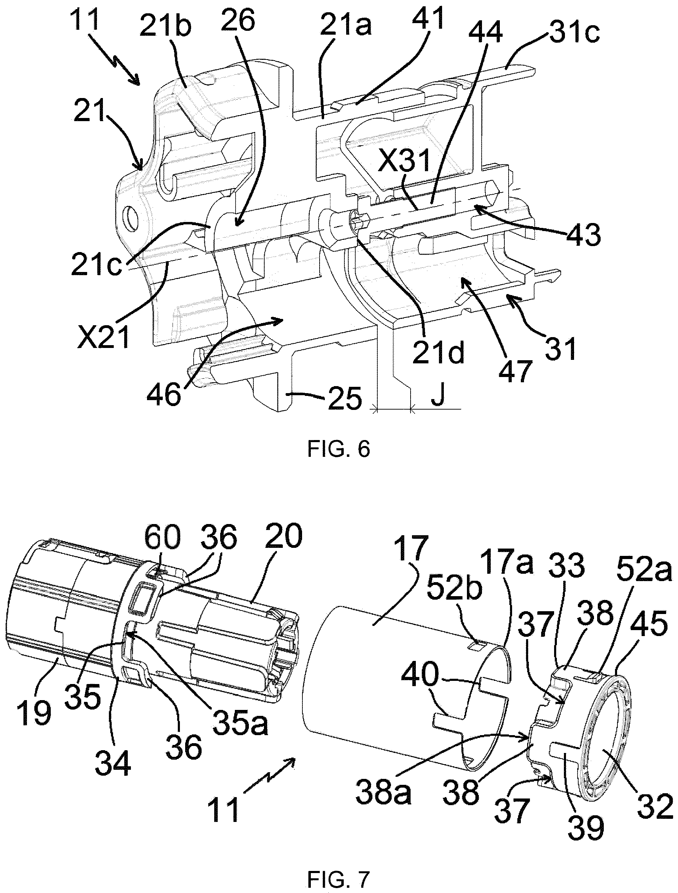

Avantageusement, l'élément d'interface 31 présente un corps 31c, comme illustré aux figures 6 et 13. En outre, le corps 31c de l'élément d'interface 31 est, préférentiellement, de forme cylindrique et, plus particulièrement, de section circulaire.

Préférentiellement, le diamètre extérieur du corps 31c de l'élément d'interface 31 est inférieur au diamètre intérieur du carter 17 de l'actionneur électromécanique 11, de sorte que le corps 31c de l'élément d'interface 31 puisse être inséré dans le carter 17 de l'actionneur électromécanique 11, lors de l'assemblage de l'actionneur électromécanique 11.

Avantageusement, le frein 24 présente un corps 24c, comme illustré à la figure 13. En outre, le corps 24c du frein 24 est, préférentiellement, de forme cylindrique et, plus particulièrement, de section circulaire.

Préférentiellement, le diamètre extérieur du corps 24c du frein 24 est inférieur au diamètre intérieur du carter 17 de l'actionneur électromécanique 11, de sorte que le corps 24c du frein 24 puisse être inséré dans le carter 17 de l'actionneur électromécanique 11, lors de l'assemblage de l'actionneur électromécanique 11.

Avantageusement, le corps 31c de l'élément d'interface 31, les premier et deuxième tronçons 301, 302 du boîtier 30 de l'unité électronique de contrôle 15, le corps 16c du moteur électrique 16, le corps 19c du réducteur 19 et, éventuellement, le corps 24c du frein 24 sont assemblés entre eux au moyen d'éléments de fixation 50a, 50b, 50c, 50d, 51a, 51b, en particulier par encliquetage élastique, de sorte à former l'ensemble 27.

Ainsi, les éléments de fixation 50a, 50b, 50c, 50d, 51a, 51b des différents organes 31, 15, 16, 19, 24 de l'ensemble 27 permettent de solidariser en rotation et en translation ces organes 31, 15, 16, 19, 24 entre eux.

De cette manière, suite à la fixation des organes 31, 15, 16, 19, 24 de l'ensemble 27 l'un par rapport à l'autre, les liaisons entre les organes 31, 15, 16, 19, 24 de l'ensemble 27 sont sans débattement axial, hormis les tolérances d'assemblage des organes 31, 15, 16, 19, 24 l'un par rapport à l'autre.

En outre, l'assemblage des différents organes 31, 15, 16, 19, 24 de l'ensemble 27 au moyen des éléments de fixation 50a, 50b, 50c, 50d, 51a, 51b permet de pouvoir introduire l'ensemble 27, en une seule opération, dans le carter 17, suivant un mouvement de translation.

Ici, les éléments de fixation 50a, 50b, 50c, 50d, 51a, 51b par encliquetage élastique sont réalisés au moyen de languettes et de pions.

Ici, l'un des organes de l'ensemble 27 est assemblé à un autre des organes de l'ensemble 27 au moyen des éléments de fixation 50a, 50b, 50c, 50d, 51a, 51b par encliquetage élastique, ces éléments de fixation pouvant être au nombre de quatre et décalés angulairement d'un angle de 90° autour de l'axe de rotation X.

Le nombre et la position angulaire des éléments de fixation par encliquetage élastique entre deux des organes de l'ensemble ne sont pas limitatifs et peuvent être différents, en particulier, ces éléments de fixation peuvent être au nombre de trois et décalés angulairement d'un angle de 120° autour de l'axe de rotation.

Préférentiellement, le diamètre extérieur, respectivement, du corps 31c de l'élément d'interface 31, du boîtier 30 de l'unité électronique de contrôle 15, du corps 16c du moteur électrique 16, du corps 19c du réducteur 19 et du corps 24c du frein 24 présente une même valeur.

On décrit à présent, plus en détail et en référence aux figures 7 à 11, l'assemblage de la partie de l'actionneur électromécanique 11 du côté de l'arbre de sortie 20.

Avantageusement et comme illustré aux figures 4, 5, 7 à 11 et 13, le réducteur 19 comprend un embout 34 configuré pour coopérer avec un élément de maintien 32, au niveau de la première extrémité 17a du carter 17, dans la configuration assemblée de l'actionneur électromécanique 11. Sur la figure 7, seule une partie du carter 17 est représentée, à proximité de son extrémité 17a.

Préférentiellement, l'embout 34 comprend des encoches 35 et des languettes 36, disposées alternativement autour de l'axe de rotation X, configurées pour coopérer, respectivement, avec des languettes 38 et des encoches 37 de l'élément de maintien 32, comme illustré à la figure 7.

Ainsi, les languettes 38 de l'élément de maintien 32 sont configurées pour s'engager dans les encoches 35 de l'embout 34, dans la configuration assemblée de l'actionneur électromécanique 11. En outre, les languettes 36 de l'embout 34 sont configurées pour s'engager dans les encoches 37 de l'élément de maintien 32, dans la configuration assemblée de l'actionneur électromécanique 11.

Dans un tel cas, une première butée 33 de l'élément de maintien 32 configurée pour coopérer avec le réducteur 19, dans la configuration assemblée de l'actionneur électromécanique 11, est réalisée par une paroi d'extrémité 38a de chacune des languettes 38, ces parois d'extrémité venant en appui contre des parois de fond 35a de chacune des encoches 35 de l'embout 34.

Ici, l'embout 34 comprend quatre encoches 35 décalées angulairement d'un angle de 90°, autour de l'axe de rotation X, et quatre languettes 36 décalées angulairement d'un angle de 90°, autour de l'axe de rotation X. En outre, l'élément de maintien 32 comprend quatre encoches 37 décalées angulairement d'un angle de 90°, autour de l'axe de rotation X, et quatre languettes 38 décalées angulairement d'un angle de 90°, autour de l'axe de rotation X.

Le nombre et la position angulaire des encoches et des languettes de l'embout et de l'élément de maintien ne sont pas limitatifs et peuvent être différents, en particulier, ces encoches et languettes peuvent être au nombre de trois et décalées angulairement d'un angle de 120° autour de l'axe de rotation.

Ici, l'embout 34 du réducteur 19 est une pièce additionnelle par rapport aux éléments formant le corps 19c du réducteur 19, de sorte à optimiser le dimensionnement des engrenages du réducteur 19 et à faciliter leur assemblage à l'intérieur du corps 19c du réducteur 19.

En variante, non représentée, l'embout 34 du réducteur 19 fait partie intégrante d'un élément du corps 19c du réducteur 19, de sorte à réduire le nombre de pièces constituant le réducteur 19.

L'actionneur électromécanique 11 comprend également l'élément de maintien 32. L'élément de maintien 32 est assemblé au niveau de la première extrémité 17a du carter 17, de sorte à obturer la première extrémité 17a du carter 17.

L'élément de maintien 32 comprend la première butée 33 configurée pour coopérer avec le réducteur 19, dans la configuration assemblée de l'actionneur électromécanique 11.

Ainsi, la première butée 33 de l'élément de maintien 32 permet de limiter l'enfoncement du réducteur 19 à l'intérieur du carter 17.

Ici, la première butée 33 de l'élément de maintien 32 permet de bloquer le déplacement en translation de l'ensemble 27 à l'intérieur du carter 17, lors de l'assemblage de l'actionneur électromécanique 11.

L'élément de maintien 32 comprend une deuxième butée 45 configurée pour coopérer avec le carter 17, au niveau de la première extrémité 17a du carter 17, dans la configuration assemblée de l'actionneur électromécanique 11.

Ainsi, la deuxième butée 45 de l'élément de maintien 32 permet de limiter l'enfoncement de l'élément de maintien 32 dans le carter 17.

Ici, la deuxième butée 45 de l'élément de maintien 32 est réalisée sous la forme d'une collerette, en particulier de forme cylindrique et plane, perpendiculaire à l'axe de rotation X, dans la configuration assemblée de l'actionneur électromécanique 11.

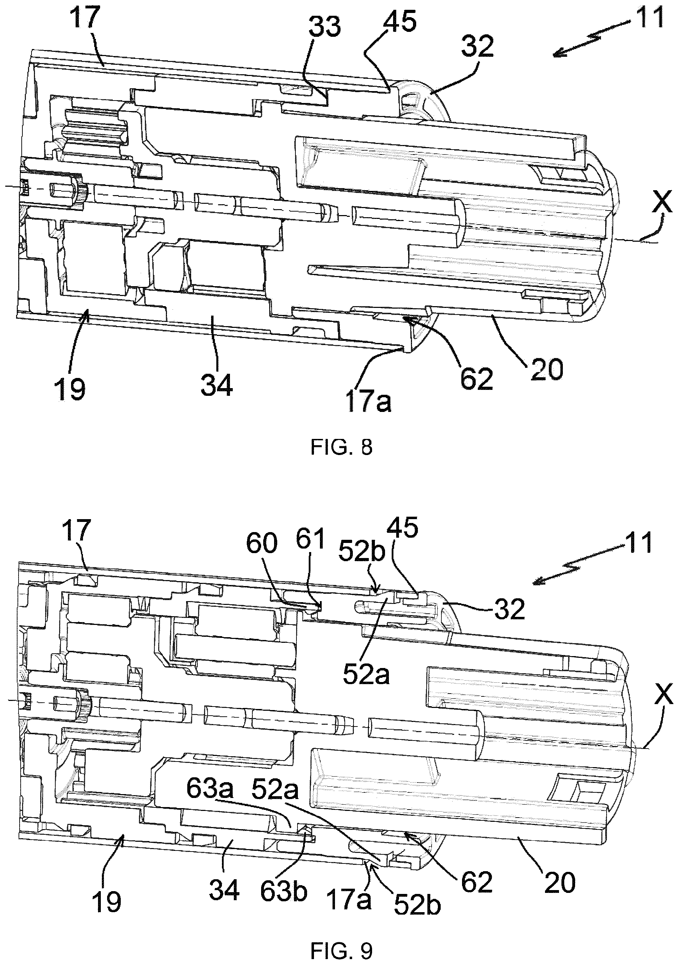

L'élément de maintien 32 comprend un logement 61 configuré pour coopérer avec une nervure 60 du réducteur 19 et, plus particulièrement, de l'embout 34 du réducteur 19, de sorte à participer à l'étanchéité entre l'élément de maintien 32 et le réducteur 19. Le logement 61 n'est pas visible dans la représentation de la figure 7, mais peut être repéré sur les figures 9 à 11.

Ainsi, l'étanchéité de l'actionneur électromécanique 11, au niveau de la première extrémité 17a du carter 17, est mise en œuvre, d'une part, par l'emmanchement en partie de l'élément de maintien 32 à l'intérieur du carter 17, de sorte à obturer la première extrémité 17a du carter 17, et, d'autre part, par la formation d'une chicane entre l'élément de maintien 32 et le réducteur 19, au moyen du logement 61 de l'élément de maintien 32 et de la nervure 60 du réducteur 19.

De cette manière, l'assemblage de l'élément de maintien 32 avec le carter 17 et le réducteur 19, au niveau de la première extrémité 17a du carter 17, permet de garantir l'étanchéité de l'actionneur électromécanique 11 de manière fiable, tout en minimisant les coûts d'obtention de l'actionneur électromécanique 11.

Par conséquent, un tel assemblage de l'actionneur électromécanique 11, au niveau de la première extrémité 17a du carter 17, permet d'éviter un défaut d'étanchéité de l'actionneur électromécanique 11 et donc d'isolement électrique, suite à l'installation de l'actionneur électromécanique 11 dans l'installation domotique.

La formation d'une chicane entre l'élément de maintien 32 et le réducteur 19, au moyen du logement 61 de l'élément de maintien 32 et de la nervure 60 du réducteur 19, permet d'empêcher une infiltration d'eau s'écoulant entre l'arbre de sortie 20 et l'élément de maintien 32, vers l'intérieur de l'actionneur électromécanique 11 et, plus particulièrement, entre l'élément de maintien 32, le réducteur 19 et le carter 17.

Préférentiellement, la chicane formée entre l'élément de maintien 32 et le réducteur 19, au moyen du logement 61 de l'élément de maintien 32 et de la nervure 60 du réducteur 19, est réalisée par la coopération d'au moins une paroi du logement 61 de l'élément de maintien 32 avec au moins une paroi de la nervure 60 du réducteur 19.

Avantageusement, le nombre de parois configurées pour coopérer ensemble entre le logement 61 de l'élément de maintien 32 et la nervure 60 du réducteur 19 est dépendant d'une section angulaire de l'élément de maintien 32 par rapport au réducteur 19 autour de l'axe de rotation X, dans la configuration assemblée de l'actionneur électromécanique 11.

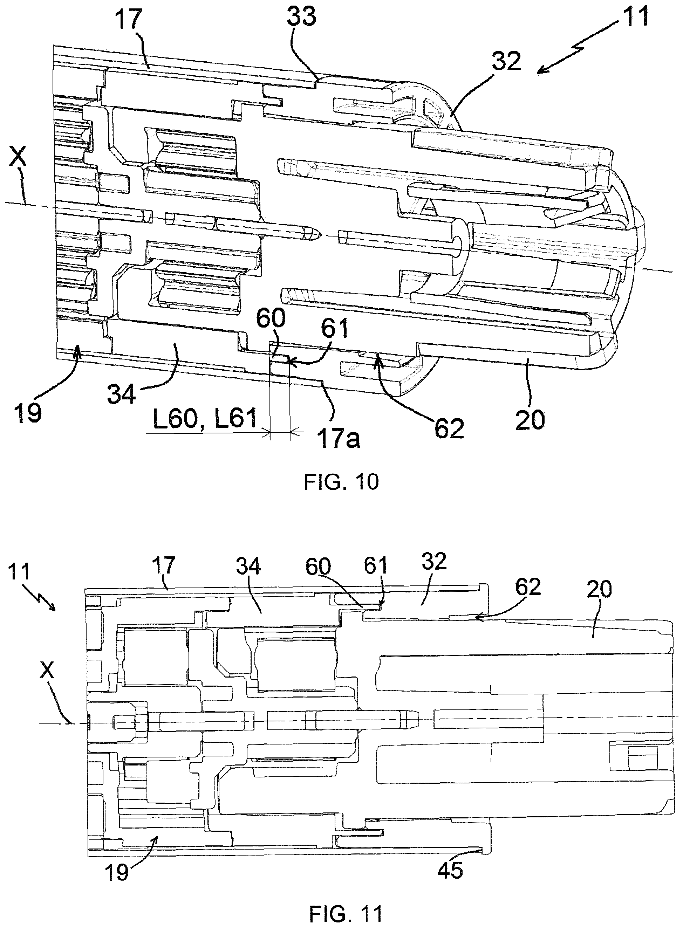

Ici, le logement 61 de l'élément de maintien 32 comprend une paroi configurée pour coopérer avec une paroi de la nervure 60 du réducteur 19, comme illustré à la figure 9, c'est-à-dire selon un premier plan de coupe de l'actionneur électromécanique 11 passant par l'axe de rotation X. En outre, le logement 61 de l'élément de maintien 32 comprend deux parois configurées pour coopérer respectivement avec une paroi de la nervure 19 du réducteur 19, comme illustré aux figures 10 et 11, c'est-à-dire selon un deuxième plan de coupe de l'actionneur électromécanique 11 passant par l'axe de rotation X, de sorte que le logement 61 de l'élément de maintien 32 forme une gorge.

Avantageusement, la longueur L61 du logement 61 de l'élément de maintien 32 et la longueur L60 de la nervure 60 du réducteur 19 s'étendent respectivement parallèlement à l'axe de rotation X de l'actionneur électromécanique 11, comme illustré à la figure 10.

Ici et comme illustré aux figures 9 à 11, l'élément de maintien 32 comprend un unique logement 61. En outre, le réducteur 19 comprend une unique nervure 60.

En variante, non représentée, l'élément de maintien 32 comprend une pluralité de logements 61. En outre, le réducteur 19 peut comprendre une pluralité de nervures 60. Dans un tel cas, le nombre de logements 61 de l'élément de maintien 32 est, préférentiellement, égal au nombre de nervures 60 du réducteur 19.

Ici, le logement 61 de l'élément de maintien 32 et la nervure 60 du réducteur 19 présentent respectivement une section circulaire, cette section étant prise perpendiculairement à l'axe de rotation X.

Préférentiellement, l'élément de maintien 32 est configuré pour être inséré à l'intérieur du carter 17, jusqu'à la mise en appui de la deuxième butée 45 de l'élément de maintien 32 avec le carter 17, avec un ajustement serré, de sorte à participer à l'étanchéité entre l'élément de maintien 32 et le carter 17.

Préférentiellement, l'élément de maintien 32 comprend une ouverture 62 de passage de l'arbre de sortie 20.

Ainsi, l'arbre de sortie 20 est configuré pour s'étendre de part et d'autre de l'élément de maintien 32 en passant au travers de l'ouverture 62.

Ici, l'ouverture 62 de l'élément de maintien 32 est centrée par rapport à l'axe de rotation X de l'actionneur électromécanique 11.

Avantageusement, l'arbre de sortie 20 comprend des éléments de fixation 63a configurés pour coopérer avec des éléments de fixation 63b du réducteur 19 et, plus particulièrement, de l'embout 34 du réducteur 19.

Ainsi, l'arbre de sortie 20 et le réducteur 19 sont également assemblés entre eux au moyen des éléments de fixation 63a, 63b.

De cette manière, l'assemblage de l'arbre de sortie 20 avec le réducteur 19 permet de bloquer en translation l'arbre de sortie 20 par rapport au réducteur 19 et à l'élément de maintien 32.

Préférentiellement, les éléments de fixation 63a, 63b de l'arbre de sortie 20 et du réducteur 19 sont des éléments de fixation par encliquetage élastique.

Ainsi, l'assemblage de l'arbre de sortie 20 avec l'élément de maintien 32 est mis en oeuvre de manière simple et peu onéreuse.

Avantageusement, l'élément de maintien 32 comprend des crans 39, chacun en forme de saillie radiale, configurés pour coopérer avec des premières échancrures 40 du carter 17, comme illustré à la figure 7. Les premières échancrures 40 sont ménagées au niveau de la première extrémité 17a du carter 17.

Ainsi, l'élément de maintien 32 est bloqué en rotation par rapport au carter 17 au moyen des crans 39 de l'élément de maintien 32 et des échancrures 40 du carter 17.

Ici, l'élément de maintien 32 comprend deux crans 39 diamétralement opposés par rapport à l'axe de rotation X, dont un seul cran 39 est illustré à la figure 7. En outre, le carter 17 comprend deux premières échancrures 40 diamétralement opposées par rapport à l'axe de rotation X.

De cette manière, un tel assemblage de l'embout 34, de l'élément de maintien 32 et du carter 17 permet de bloquer en rotation l'ensemble 27 par rapport au carter 17 et, plus particulièrement, le réducteur 19 par rapport au carter 17.

En outre, la coopération des crans 39 de l'élément de maintien 32 avec les premières échancrures 40 du carter 17 permet de réaliser une reprise de couple transmis par le réducteur 19 au carter 17.

Avantageusement, l'élément de maintien 32 comprend des éléments de fixation 52a configurés pour coopérer avec des éléments de fixation 52b du carter 17.

Ainsi, l'élément de maintien 32 et le carter 17 sont également assemblés entre eux au moyen des éléments de fixation 52a, 52b.

De cette manière, l'assemblage de l'élément de maintien 32 avec le carter 17 permet de bloquer en translation l'élément de maintien 32 et, plus particulièrement, l'ensemble 27 par rapport au carter 17 et, plus particulièrement, par rapport à la première extrémité 17a du carter 17.

En outre, suite à la fixation de l'élément de maintien 32 par rapport au carter 17, l'élément de maintien 32 sert de butée pour l'ensemble 27, lors du coulissement de l'ensemble 27 à l'intérieur du carter 17, suivant la direction axiale de l'actionneur électromécanique 11 et à partir de la deuxième extrémité 17b du carter 17 vers la première extrémité 17a du carter 17.

Préférentiellement, les éléments de fixation 52a, 52b de l'élément de maintien 32 et du carter 17 sont des éléments de fixation par encliquetage élastique.

Ainsi, l'assemblage de l'élément de maintien 32 avec le carter 17 est mis en oeuvre de manière simple et peu onéreuse.

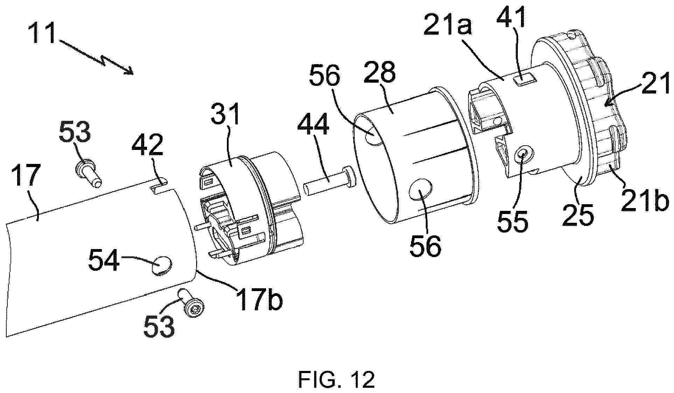

On décrit à présent, plus en détail et en référence à la figure 12, l'assemblage de la partie de l'actionneur électromécanique 11 du côté de l'élément d'obturation 21.

Avantageusement, l'élément d'obturation 21 et, plus particulièrement, la première partie 21a de l'élément d'obturation 21 comprend des crans 41, chacun en forme de saillie radiale, configurés pour coopérer avec des deuxièmes échancrures 42 du carter 17. Les deuxièmes échancrures 42 sont ménagées au niveau de la deuxième extrémité 17b du carter 17.

Ici, la première partie 21a de l'élément d'obturation 21 comprend deux crans 41 diamétralement opposés par rapport à l'axe de rotation X. En outre, le carter 17 comprend deux deuxièmes échancrures 42 diamétralement opposées par rapport à l'axe de rotation X.

De cette manière, un tel assemblage de l'élément d'obturation 21 et du carter 17 permet de bloquer en rotation l'élément d'obturation 21 par rapport au carter 17.

Par ailleurs, l'élément d'obturation 21 et le carter 17 sont également assemblés entre eux au moyen d'éléments de fixation 53, en particulier par vissage.

De cette manière, l'assemblage de l'élément d'obturation 21 avec le carter 17 permet de bloquer en translation l'élément d'obturation 21 par rapport au carter 17 et, plus particulièrement, par rapport à la deuxième extrémité 17b du carter 17.

Ici, la fixation de l'élément d'obturation 21 avec le carter 17 est mise en oeuvre au moyen de vis de fixation 53, pouvant être, par exemple, de type auto-taraudeuse. Dans la configuration assemblée de l'actionneur électromécanique 11, les vis de fixation 53 traversent des trous de passage 54 ménagés dans le carter 17 et sont vissées dans des trous de fixation 55 de l'élément d'obturation 21. En outre, les vis de fixation 53 traversent des trous de passage 56 ménagés dans la couronne 28.

En variante, non représentée, les éléments de fixation de l'élément d'obturation 21 avec le carter 17 peuvent être des rivets ou des éléments de fixation par encliquetage élastique.

Un tel assemblage de l'actionneur électromécanique 11 permet de prévoir un jeu J, en particulier axial, entre l'élément d'obturation 21 et l'élément d'interface 31, suivant la direction axiale de l'actionneur électromécanique 11, comme illustré à la figure 5.

Le jeu J permet de garantir l'assemblage de l'élément d'obturation 21 par rapport au carter 17.

Ici et de manière nullement limitative, le jeu J entre l'élément d'obturation 21 et l'élément d'interface 31, suivant la direction axiale de l'actionneur électromécanique 11, peut être de l'ordre de plus ou moins deux millimètres.

Avantageusement, l'élément d'interface 31 comprend un premier logement 43 à l'intérieur duquel est disposé un élément d'inhibition 44 du jeu J entre l'élément d'obturation 21 et l'élément d'interface 31, suivant la direction axiale de l'actionneur électromécanique 11.

Ainsi, l'élément d'inhibition 44 du jeu J entre l'élément d'obturation 21 et l'élément d'interface 31, suivant la direction axiale de l'actionneur électromécanique 11, permet d'améliorer la tenue des organes 31, 15, 16, 19, 24, 20 de l'actionneur électromécanique 11 disposés à l'intérieur du carter 17 et de s'affranchir du risque de déconnexion électrique de l'unité électronique de contrôle 15 par rapport au câble d'alimentation électrique 18 et par rapport au moteur électrique 16, notamment lors d'un choc de l'actionneur électromécanique 11, pouvant intervenir lors d'une manipulation ou du transport de l'actionneur électromécanique 11, ou lors d'un fonctionnement anormal de l'actionneur électromécanique 11.

De cette manière, une telle construction de l'actionneur électromécanique 11 permet d'inhiber le jeu J entre l'élément d'obturation 21 et l'élément d'interface 31, suivant la direction axiale de l'actionneur électromécanique 11, suite à l'assemblage de l'actionneur électromécanique 11, de sorte à garantir un état fonctionnel de l'actionneur électromécanique 11, au cours des différentes phases de vie de l'actionneur électromécanique 11.

En outre, l'élément d'inhibition 44 permet de bloquer en translation l'élément d'interface 31 par rapport à l'élément d'obturation 21.

Ici, le premier logement 43 de l'élément d'interface 31 est de forme générale cylindrique, centré sur un axe longitudinal X31 de l'élément d'interface 31.

Par ailleurs, l'axe longitudinal X31 de l'élément d'interface 31 est confondu avec l'axe de rotation X du moteur électrique 16 de l'actionneur électromécanique 11, ou encore l'axe de rotation du tube d'enroulement 4, en configuration montée du dispositif d'entraînement motorisé 5.

Préférentiellement, l'élément d'obturation 21 comprend un premier logement 26 débouchant au niveau d'une première face 21c de l'élément d'obturation 21 et au niveau d'une deuxième face 21d de l'élément d'obturation 21.

Le premier logement 26 de l'élément d'obturation 21 est disposé en vis-à-vis de l'élément d'inhibition 44, dans la configuration assemblée de l'actionneur électromécanique 11, de sorte à permettre un ajustement en position de l'élément d'inhibition 44 à partir de l'extérieur de l'élément d'obturation 21.

Ainsi, le réglage en position de l'élément d'inhibition 44 par rapport à l'élément d'interface 31 et à l'élément d'obturation 21, suivant la direction axiale de l'actionneur électromécanique 11, peut être mis en œuvre à partir de l'extérieur de l'élément d'obturation 21 et, plus particulièrement, de l'actionneur électromécanique 11, en manœuvrant l'élément d'inhibition 44 au moyen d'un outil, non représenté, tel qu'un tournevis, qui traverse le premier logement 26 de l'élément d'obturation 21, comme expliqué ci-après.

De cette manière, le positionnement de l'élément d'inhibition 44 par rapport à l'élément d'interface 31 et à l'élément d'obturation 21, suivant la direction axiale de l'actionneur électromécanique 11, peut être mis en œuvre en fonction de la valeur du jeu J, sans avoir à démonter un ou plusieurs éléments de l'actionneur électromécanique 11.

Ici, le premier logement 26 de l'élément d'obturation 21 est de forme générale cylindrique, centré sur un axe longitudinal X21 de l'élément d'obturation 21.

Par ailleurs, l'axe longitudinal X21 de l'élément d'obturation 21 est confondu avec l'axe de rotation X du moteur électrique 16 de l'actionneur électromécanique 11, ou encore l'axe de rotation du tube d'enroulement 4, en configuration montée du dispositif d'entraînement motorisé 5. En outre, l'axe longitudinal X21 de l'élément d'obturation 21 est confondu avec l'axe longitudinal X31 de l'élément d'interface 31, dans la configuration assemblée de l'actionneur électromécanique 11.

Avantageusement, l'élément d'inhibition 44 est configuré pour coopérer avec une face de l'élément d'obturation 21 et, plus particulièrement, la deuxième face 21d de l'élément d'obturation 21, suite à un ajustement en position de l'élément d'inhibition 44 par rapport à l'élément d'obturation 21, suivant la direction axiale de l'actionneur électromécanique 11, de sorte à inhiber le jeu J entre l'élément d'obturation 21 et l'élément d'interface 31.

Ainsi, l'inhibition du jeu J entre l'élément d'obturation 21 et l'élément d'interface 31 est mis en œuvre par le réglage en position de l'élément d'inhibition 44 par rapport à l'élément d'interface 31 et à l'élément d'obturation 21, suivant la direction axiale de l'actionneur électromécanique 11 et, plus particulièrement, la mise en appui de l'élément d'inhibition 44 contre la deuxième face 21d de l'élément d'obturation 21.

Préférentiellement, l'élément d'inhibition 44 est une vis. En outre, le premier logement 43 de l'élément d'interface 31 est un alésage.

Ici, l'élément d'inhibition 44 est une vis présentant un filetage métrique. En outre, le premier logement 43 de l'élément d'interface 31 est un alésage taraudé.

En variante, non représentée, l'élément d'inhibition 44 est une vis auto-taraudeuse. Dans ce cas, le premier logement 43 de l'élément d'interface 31 est un alésage lisse.

Dans un exemple de réalisation, la vis formant l'élément d'inhibition 44 est une vis identique aux vis formant les éléments de fixation 53 de l'élément d'obturation 21 avec le carter 17.

Ainsi, le nombre de modèles de vis pour la fabrication de l'actionneur électromécanique 11 est limité, de sorte à simplifier l'industrialisation et à éviter des risques d'erreur de référence.

En pratique, une tête de la vis formant l'élément d'inhibition 44 est configurée pour coopérer avec la deuxième face 21d de l'élément d'obturation 21, suite à un dévissage de la vis 44 par rapport à l'alésage 43 de l'élément d'interface 31, de sorte à inhiber le jeu J entre l'élément d'obturation 21 et l'élément d'interface 31.

Avantageusement, le premier logement 26 ménagé dans l'élément d'obturation 21 permet le passage d'un outil, en particulier d'un tournevis, de sorte à atteindre l'élément d'inhibition 44 et, plus particulièrement, permettre le dévissage de la vis formant l'élément d'inhibition 44.

Préférentiellement, l'élément d'inhibition 44 est assemblé sur l'élément d'interface 31 avant l'introduction de l'ensemble 27 à l'intérieur du carter 17.

Ainsi, l'opération d'assemblage de l'élément d'inhibition 44 sur l'élément d'interface 31 n'engendre pas un allongement du temps d'assemblage de l'ensemble 27 à l'intérieur du carter 17, puisque cette opération peut être mise en œuvre en temps masqué, au cours de la fabrication de l'actionneur électromécanique 11.

Ici, la vis 44 est vissée à l'intérieur du premier logement 43 de l'élément d'interface 31 avant l'introduction de l'ensemble 27 à l'intérieur du carter 17, en particulier jusqu'à la mise en appui de la tête de la vis 44 contre le rebord du premier logement 43 de l'élément d'interface 31.

Avantageusement, l'élément d'obturation 21 comprend un deuxième logement 46. Le deuxième logement 46 de l'élément d'obturation 21 est configuré pour permettre le passage du câble d'alimentation électrique 18.

En outre, l'élément d'interface 31 comprend un deuxième logement 47. Le deuxième logement 47 de l'élément d'interface 31 comprend en partie le premier connecteur électrique 48. Le premier connecteur électrique 48 ménagé dans le deuxième logement 47 de l'élément d'interface 31 est configuré pour coopérer avec un connecteur électrique du câble d'alimentation électrique 18.

Par ailleurs, le premier connecteur électrique 48 de l'élément d'interface 31 est relié électriquement à l'unité électronique de contrôle 15, au moyen d'éléments de connexion électrique, en particulier au moyen de broches électriques, non représentées, configurés pour coopérer avec des pistes de la carte électronique 29 de l'unité électronique de contrôle 15.

Ainsi, le connecteur électrique du câble d'alimentation électrique 18 est configuré pour coopérer avec le premier connecteur électrique 48 de l'élément d'interface 31, de sorte à alimenter en énergie électrique le moteur électrique 16, au moyen du câble d'alimentation électrique 18.

Dans un exemple de réalisation, non représenté, le deuxième logement 46 de l'élément d'obturation 21 est également configuré pour permettre le passage d'un câble d'échange de données.

Dans ce cas, l'élément d'interface 31 comprend un troisième logement. Le troisième logement de l'élément d'interface 31 comprend un deuxième connecteur électrique. Le deuxième connecteur électrique ménagé dans le troisième logement de l'élément d'interface 31 est configuré pour coopérer avec un connecteur électrique du câble d'échange de données.

Par ailleurs, toujours dans ce cas, le deuxième connecteur électrique de l'élément d'interface 31 est relié électriquement à l'unité électronique de contrôle 15, au moyen d'éléments de connexion électrique, en particulier au moyen de broches électriques, non représentées, configurés pour coopérer avec des pistes de la carte électronique 29 de l'unité électronique de contrôle 15.

Dans un tel cas où l'actionneur électromécanique 11 est relié au câble d'échange de données, celui-ci permet à l'unité électronique de contrôle 15 de recevoir et/ou d'émettre des données avec une unité de commande, en particulier avec l'unité de commande locale 12 et/ou l'unité de commande centrale 13, par une liaison filaire.

Ainsi, le connecteur électrique du câble d'échange de données est configuré pour coopérer avec le deuxième connecteur électrique de l'élément d'interface 31, de sorte à échanger des données entre au moins l'une des unités de commande 12, 13 et l'unité électronique de contrôle 15.

Grâce à la présente invention, l'étanchéité de l'actionneur électromécanique, au niveau de la première extrémité du carter, est mise en œuvre, d'une part, par l'emmanchement en partie de l'élément de maintien à l'intérieur du carter, de sorte à obturer la première extrémité du carter, et, d'autre part, par la formation d'une chicane entre l'élément de maintien et le réducteur, au moyen du logement de l'élément de maintien et de la nervure du réducteur.

De cette manière, l'assemblage de l'élément de maintien avec le carter et le réducteur, au niveau de la première extrémité du carter, permet de garantir l'étanchéité de l'actionneur électromécanique de manière fiable, tout en minimisant les coûts d'obtention de l'actionneur électromécanique.

De nombreuses modifications peuvent être apportées aux exemples de réalisation décrits précédemment.

En variante, non représentée, le boîtier 30 de l'unité électronique de contrôle 15 comprend un nombre de tronçons, réalisés sous la forme d'un tube creux, supérieur ou égal à trois.

En variante, non représentée, l'unité électronique de contrôle 15 est disposée à l'extérieur du carter 17 de l'actionneur électromécanique 11 et, en particulier, montée sur le support 23 ou dans l'élément d'obturation 21.

En outre, les modes de réalisation et variantes envisagés peuvent être combinés pour générer de nouveaux modes de réalisation de l'invention, sans sortir du cadre de l'invention, telle que définie dans les revendications.

## Revendications

1. Actionneur électromécanique tubulaire (11) pour une installation domotique de fermeture ou de protection solaire, l'actionneur électromécanique (11) comprenant au moins :
- un moteur électrique (16),
- un réducteur (19),
- un arbre de sortie (20), et
- un carter (17), le carter (17) étant creux et configuré pour loger au moins le moteur électrique (16) et le réducteur (19), le carter (17) comprenant une première extrémité (17a) et une deuxième extrémité (17b), la deuxième extrémité (17b) étant opposée à la première extrémité (17a), **caractérisé en ce que** :
- l'actionneur électromécanique (11) comprend également un élément de maintien (32), l'élément de maintien (32) étant assemblé au niveau de la première extrémité (17a) du carter (17), de sorte à obturer la première extrémité (17a) du carter (17),
- l'élément de maintien (32) comprend au moins :
o une première butée (33) configurée pour coopérer avec le réducteur (19), dans une configuration assemblée de l'actionneur électromécanique (11), et
o une deuxième butée (45) configurée pour coopérer avec le carter (17), au niveau de la première extrémité (17a) du carter (17), dans la configuration assemblée de l'actionneur électromécanique (11), et
- l'élément de maintien (32) comprend au moins un logement (61) configuré pour coopérer avec au moins une nervure (60) du réducteur (19), de sorte à participer à l'étanchéité entre l'élément de maintien (32) et le réducteur (19).

2. Actionneur électromécanique tubulaire (11) pour une installation domotique de fermeture ou de protection solaire selon la revendication 1, **caractérisé en ce que** le réducteur (19) comprend un embout (34) configuré pour coopérer avec l'élément de maintien (32), au niveau de la première extrémité (17a) du carter (17), dans la configuration assemblée de l'actionneur électromécanique (11).

3. Actionneur électromécanique tubulaire (11) pour une installation domotique de fermeture ou de protection solaire selon la revendication 2, **caractérisé en ce que** l'embout (34) comprend des encoches (35) et des languettes (36), disposées alternativement autour d'un axe de rotation (X) de l'actionneur électromécanique (11), configurées pour coopérer, respectivement, avec des languettes (38) et des encoches (37) de l'élément de maintien (32).

4. Actionneur électromécanique tubulaire (11) pour une installation domotique de fermeture ou de protection solaire selon l'une quelconque des revendications 1 à 3, **caractérisé en ce que** l'élément de maintien (32) comprend des crans (39) configurés pour coopérer avec des premières échancrures (40) du carter (17), les premières échancrures (40) étant ménagées au niveau de la première extrémité (17a) du carter (17).

5. Actionneur électromécanique tubulaire (11) pour une installation domotique de fermeture ou de protection solaire selon l'une quelconque des revendications 1 à 4, **caractérisé en ce que** l'élément de maintien (32) comprend une ouverture (62) de passage de l'arbre de sortie (20).

6. Actionneur électromécanique tubulaire (11) pour une installation domotique de fermeture ou de protection solaire selon l'une quelconque des revendications 1 à 5, **caractérisé en ce que** l'élément de maintien (32) comprend des éléments de fixation (52a) configurés pour coopérer avec des éléments de fixation (52b) du carter (17).

7. Actionneur électromécanique tubulaire (11) pour une installation domotique de fermeture ou de protection solaire selon la revendication 6, **caractérisé en ce que** les éléments de fixation (52a, 52b) de l'élément de maintien (32) et du carter (17) sont des éléments de fixation par encliquetage élastique.

8. Actionneur électromécanique tubulaire (11) pour une installation domotique de fermeture ou de protection solaire selon l'une quelconque des revendications 1 à 7, **caractérisé en ce que** l'arbre de sortie (20) est configuré pour dépasser du carter (17) au niveau de la première extrémité du carter (17), dans la configuration assemblée de l'actionneur électromécanique (11).

9. Actionneur électromécanique tubulaire (11) pour une installation domotique de fermeture ou de protection solaire selon l'une quelconque des revendications 1 à 8, **caractérisé en ce que** l'élément de maintien (32) est configuré pour être inséré à l'intérieur du carter (17), jusqu'à la mise en appui de la deuxième butée (45) de l'élément de maintien (32) avec le carter (17), avec un ajustement serré, de sorte à participer à l'étanchéité entre l'élément de maintien (32) et le carter (17).

10. Installation domotique de fermeture ou de protection solaire comprenant un écran , un tube d'enroulement (4) et un actionneur électromécanique tubulaire (11), l'écran étant enroulable sur le tube d'enroulement (4) entraîné en rotation par l' actionneur électromécanique tubulaire (11), **caractérisée en ce que** l'actionneur électromécanique tubulaire (11) est conforme à l'une quelconque des revendications 1 à 9.

## Patentansprüche

1. Rohrförmiger elektromechanisches Stellglied (11) für eine häusliche Schließ- oder Sonnenschutzautomatisierungsanlage, wobei das elektromechanische Stellglied (11) wenigstens umfasst:
- einen Elektromotor (16),
- ein Getriebe (19),
- eine Abtriebswelle (20) und
- einen Kasten (17), wobei der Kasten (17) hohl ist und eingerichtet ist für das Aufnehmen wenigstens des Elektromotors (16) und des Getriebes (19), wobei der Kasten (17) ein erstes Ende (17a) und ein zweites Ende (17b) umfasst, wobei das zweite Ende (17b) zu dem ersten Ende (17a) entgegengesetzt ist,
**dadurch gekennzeichnet, dass**:
- das elektromechanische Stellglied (11) ferner ein Halteelement (32) umfasst, wobei das Haltelement (32) im Bereich des erstes Endes (17a) des Kastens (17) montiert ist, so dass es das erste Ende (17a) des Kastens (17) verschließt,
- das Halteelement (32) wenigstens umfasst:
o einen ersten Anschlag (33), der eingerichtet ist für das Zusammenwirken mit dem Getriebe (19), in einer montierten Konfiguration des elektromechanischen Stellglieds (11), und
o einen zweiten Anschlag (45), der eingerichtet ist für das Zusammenwirken mit dem Kasten (17), im Bereich des ersten Endes (17a) des Kastens (17), in der montierten Konfiguration des elektromechanischen Stellglieds (11), und
- das Halteelement (32) wenigstens eine Aufnahme (61) umfasst, die eingerichtet ist für das Zusammenwirken mit wenigstens einer Rippe (60) des Getriebes (19), so dass sie an der Abdichtung zwischen dem Halteelement (32) und dem Getriebe (19) beteiligt ist.

2. Rohrförmiges elektromechanisches Stellglied (11) für eine häusliche Schließ- oder Sonnenschutzautomatisierungsanlage nach Anspruch 1, **dadurch gekennzeichnet, dass** das Getriebe (19) ein Endstück (34) umfasst, das eingerichtet ist für das Zusammenwirken mit dem Halteelement (32), im Bereich des ersten Endes (17a) des Kastens (17), in der montierten Konfiguration des elektromechanischen Stellglieds (11).

3. Rohrförmiges elektromechanische Stellglied (11) für eine häusliche Schließ- oder Sonnenschutzautomatisierungsanlage nach Anspruch 2, **dadurch gekennzeichnet, dass** das Endstück (34) Einkerbungen (35) und Zungen (36) umfasst, die alternierend um eine Rotationsachse (X) des elektromechanischen Stellglieds (11) angeordnet sind und eingerichtet sind für das Zusammenwirken mit Zungen (38) bzw. Einkerbungen (37) des Halteelements (32).

4. Rohrförmiges elektromechanische Stellglied (11) für eine häusliche Schließ- oder Sonnenschutzautomatisierungsanlage nach einem der Ansprüche 1 bis 3, **dadurch gekennzeichnet, dass** das Halteelement (32) Rastkerben (39) umfasst, die eingerichtet sind für das Zusammenwirken mit ersten Einkerbungen (40) des Kastens (17), wobei die ersten Einkerbungen (40) im Bereich des ersten Endes (17a) des Kastens (17) vorgesehen sind.

5. Rohrförmiges elektromechanisches Stellglied (11) für eine häusliche Schließ- oder Sonnenschutzautomatisierungsanlage nach einem der Ansprüche 1 bis 4, **dadurch gekennzeichnet, dass** das Halteelement (32) eine Öffnung (62) für den Durchtritt der Abtriebswelle (20) umfasst.

6. Rohrförmiges elektromechanisches Stellglied (11) für eine häusliche Schließ- oder Sonnenschutzautomatisierungsanlage nach einem der Ansprüche 1 bis 5, **dadurch gekennzeichnet, dass** das Halteelement (32) Befestigungselemente (52a) umfasst, die eingerichtet sind für das Zusammenwirken mit Befestigungselementen (52b) des Kastens (17).

7. Rohrförmiges elektromechanisches Stellglied (11) für eine häusliche Schließ- oder Sonnenschutzautomatisierungsanlage nach Anspruch 6, **dadurch gekennzeichnet, dass** die Befestigungselemente (52a, 52b) des Befestigungselements (32) und des Kastens (17) Elemente zum Befestigen durch elastisches Einrasten sind.

8. Rohrförmiges elektromechanisches Stellglied (11) für eine häusliche Schließ- oder Sonnenschutzautomatisierungsanlage nach einem der Ansprüche 1 bis 7, **dadurch gekennzeichnet, dass** die Abtriebswelle (20) eingerichtet ist, um im Bereich des ersten Endes des Kastens (17) über den Kasten (17) überzustehen, in der montierten Konfiguration des elektromechanischen Stellglieds (11).

9. Rohrförmiges elektromechanisches Stellglied (11) für eine häusliche Schließ- oder Sonnenschutzautomatisierungsanlage nach einem der Ansprüche 1 bis 8, **dadurch gekennzeichnet, dass** das Halteelement (32) eingerichtet ist, um in das Innere des Kastens (17) eingesetzt zu werden, bis der zweite Anschlag (45) des Halteelements (32) mit dem Kasten (17), mit einer formschlüssigen Verbindung, in Anlage kommt, so dass er an der Abdichtung zwischen dem Halteelement (32) und dem Kasten (17) beteiligt ist.

10. Häusliche Schließ- oder Sonnenschutzautomatisierungsanlage, umfassend eine Blende (2), ein Wickelrohr (4) und ein rohrförmiges elektromechanisches Stellglied (11), wobei die Blende auf das Wickelrohr (4) wickelbar ist, das von dem rohrförmigen elektromechanischen Stellglied (11) zur Drehung angetrieben ist, **dadurch gekennzeichnet, dass** das elektromechanische Stellglied (11) nach einem der Ansprüche 1 bis 9 ausgeführt ist.

## Claims

1. A tubular electromechanical actuator (11) for a closure or sun protection home automation installation, the electromechanical actuator (11) comprising at least:
- an electric motor (16),
- a reduction gear (19),
- an output shaft (20), and
- a casing (17), the casing (17) being hollow and configured to house at least the electric motor (16) and the reduction gear (19), the casing (17) comprising a first end (17a) and a second end (17b), the second end (17b) being opposite the first end (17a),
**characterized in that**:
- the electromechanical actuator (11) also comprises a retaining element (32), the retaining element (32) being assembled at the first end (17a) of the casing (17), so as to close off the first end (17a) of the casing (17),
- the retaining element (32) comprises at least:
∘ a first stop (33) configured to cooperate with the reduction gear (19), in an assembled configuration of the electromechanical actuator (11), and
∘ a second stop (45) configured to cooperate with the casing (17), at the first end (17a) of the casing (17), in the assembled configuration of the electromechanical actuator (11), and
- the retaining element (32) comprises at least one accommodation (61) configured to cooperate with at least one rib (60) of the reduction gear (19), so as to participate in the sealing between the retaining element (32) and the reduction gear (19).

2. The tubular electromechanical actuator (11) for a closure or sun protection home automation installation according to claim 1, **characterized in that** the reduction gear (19) comprises an endpiece (34) configured to cooperate with the retaining element (32), at the first end (17a) of the casing (17), in the assembled configuration of the electromechanical actuator (11).

3. The tubular electromechanical actuator (11) for a closure or sun protection home automation installation according to claim 2, **characterized in that** the endpiece (34) comprises notches (35) and tongues (36), positioned alternating around an axis of rotation (X) of the electromechanical actuator (11), configured to cooperate, respectively, with tongues (38) and notches (37) of the retaining element (32).

4. The tubular electromechanical actuator (11) for a closure or sun protection home automation installation according to any one of claims 1 to 3, **characterized in that** the retaining element (32) comprises indentations (39) configured to cooperate with first recesses (40) of the casing (17), the first recesses (40) being arranged at the first end (17a) of the casing (17).

5. The tubular electromechanical actuator (11) for a closure or sun protection home automation installation according to any one of claims 1 to 4, **characterized in that** the retaining element (32) comprises a passage opening (62) for the output shaft (20).

6. The tubular electromechanical actuator (11) for a closure or sun protection home automation installation according to any one of claims 1 to 5, **characterized in that** the retaining element (32) comprises fastening elements (52a) configured to cooperate with fastening elements (52b) of the casing (17).

7. The tubular electromechanical actuator (11) for a closure or sun protection home automation installation according to claim 6, **characterized in that** the fastening elements (52a, 52b) of the retaining element (32) and the casing (17) are fastening elements by resilient snapping.

8. The tubular electromechanical actuator (11) for a closure or sun protection home automation installation according to any one of claims 1 to 7, **characterized in that** the output shaft (20) is configured to protrude past the casing (17) at the first end of the casing (17), in the assembled configuration of the electromechanical actuator (11).

9. The tubular electromechanical actuator (11) for a closure or sun protection home automation installation according to any one of claims 1 to 8, **characterized in that** the retaining element (32) is configured to be inserted inside the casing (17), until the bearing of the second stop (45) of the retaining element (32) with the casing (17), with a tight fit, so as to participate in the sealing between the retaining element (32) and the casing (17).

10. A home automation installation for closing or providing sun protection that comprises a screen (2), a winding tube (4) and a tubular electromechanical actuator (11), the screen being able to be wound on the winding tube (4) rotated by the tubular electromechanical actuator (11), **characterized in that** the tubular electromechanical actuator (11) is according to any one of claims 1 to 9.
